# EUROPÄISCHE PATENTSCHRIFT

(11) **EP 1 828 549 B1**
(45) Veröffentlichungstag und Bekanntmachung des Hinweises auf die Patenterteilung: **23.01.2013**
(21) Anmeldenummer: 05823673.8
(22) Anmeldetag: 21.12.2005
(51) Int. Cl.: F01K 23/10

(54) **KRAFTWERKSANLAGE**
POWER PLANT
CENTRALE ELECTRIQUE

(30) Priorität: 23.12.2004 CH 21352004
(43) Veröffentlichungstag der Anmeldung: 05.09.2007
(73) Patentinhaber: Alstom Technology Ltd, 5400 Baden (CH)
(72) Erfinder: ALTHAUS, Rolf, CH-8704 Herrliberg (CH); KOLLER, Martin, CH-5316 Gippingen (CH)
(86) Internationale Anmeldenummer: PCT/EP2005/057031
(87) Internationale Veröffentlichungsnummer: WO 2006/069948

(56) Entgegenhaltungen:
- WO-A-95/24822
- GB-A- 682 141
- US-A- 3 757 517
- US-A- 5 704 209

## Beschreibung

### Technisches Gebiet

Die vorliegende Erfindung betrifft eine Kraftwerksanlage gemäss dem Oberbegriff des Anspruchs 1.

### Stand der Technik

Aus dem Stand der Technik sind Gasturbinenkraftwerke bekannt geworden, bei welchen die Abgaswärme einer Gasturbogruppe zur Dampferzeugung genutzt wird, wobei der Dampf vielfältigen Anwendungszwecken zugeführt werden kann. In Kombikraftwerken wird der Dampf dann bestimmungsgemäss unter Leistungsabgabe in einer Dampfturbine entspannt. Die Dampfturbine treibt einen Generator zur Stromerzeugung an.

Solche Kombikraftwerke sind z.B. in GB 682 141 A, US 5704 209 A und in WO 95/24822 A offenbart.

Weiterhin ist beispielsweise aus der US 5,537,822 eine rekuperative Druckspeicheranlage bekannt gewordenen, bei der in einem Speichervolumen unter Druck gespeichertes Fluid, insbesondere Luft, in einem Wärmetauscher vom Abgas einer Gasturbogruppe erwärmt und nachgängig in einer Speicherfluid-Entspannungsmaschine zum Antrieb eines Generators unter Leistungsabgabe entspannt wird. Prinzipiell können hierbei sehr hohe Leistungen erzielt werden, da während des Leistungsbetriebes auf die Verdichtung des Fluids verzichtet wird. Dementsprechend ergeben sich bei der Nutzung der Abgaswärme in einer rekuperativen Druckspeicheranlage höhere Leistungspotenziale als bei der Nutzung in einer Dampfturbine. Diese Potenziale stehen aber nur solange zur Verfügung, wie gespanntes Fluid auf einem entsprechenden Druckniveau im Speichervolumen verfügbar ist.

Eine solche Kraftwerksanlage löst sonach das Problem nicht, dass das an sich unbestrittene Potential nur solange zur Verfügung steht, wie gespanntes Fluid auf einem entsprechenden Druckniveau im Speichervolumen verfügbar ist.

### Darstellung der Erfindung

Hier will die Erfindung Abhilfe schaffen. Der Erfindung, wie sie in den Ansprüchen gekennzeichnet ist, liegt die Aufgabe zugrunde, bei einer Schaltung der eingangs genannten Art, Massnahmen vorzuschlagen, welche die obengenannten Nachteile zu beheben vermögen. Insbesondere geht es hier um die Bereitstellung einer synergetischen und betriebstechnisch sehr vorteilhafter Schaltung vorzuschlagen, welche jederzeit in der Lage ist, durch autonome kraftwerksinterne Mittel eine maximierte resp. maximale Betriebsflexibilität unmittelbar zu ermöglichen.

Die zum Stand der Technik beschriebene Kraftwerksanlage lässt sich durch eine Erweiterung flexibel gestalten, indem die Gasturbogruppe optional mit einem Dampfkreislauf kombiniert wird, dergestalt, dass die beiden Kreisläufe, welche einzeln betrachtet an sich zum Stand der Technik gehören, in höchst synergetischer und betriebstechnisch sehr vorteilhafter Weise zusammen zu führen. Eine solche Kraftwerksanlage, nämlich die Gasturbogruppe mit einem Dampfkreislauf und mit einer Druckspeicheranlage zu kombinieren, ermöglicht zunächst eine maximale Betriebsflexibilität, wobei an geeigneter Stelle Wärmetauscher implementiert werden. Durch eine solche Schaltung gewinnt auch die Druckspeicheranlage an Potential, denn bei beispielsweise niedrigen Strompreisen lassen sich jederzeit rekuperative Massnahmen gewinnbringend anwenden.

Dabei ermöglicht die hier beschriebene Kraftwerksanlage die folgenden Betriebsarten. In einem normalen Dauerbetrieb ist ein Generator an die Gasturbogruppe angekoppelt. Ein zweiter Generator ist an die Dampfturbine angekoppelt. Ein stromab der Gasturbine angeordneter Strömungsverteiler ist so eingestellt, dass das Abgas der Gasturbogruppe zur Dampfturbine geleitet wird. Die Kraftwerksanlage arbeitet dann im herkömmlichen Kombibetrieb zur dauerhaften Stromerzeugung. Bei sinkendem elektrischen Leistungsbedarf und entsprechend niedrigen Strompreisen wird zusätzlich die Verbindung mit dem auf den Wellensträngen der Gasturbogruppe und der Dampfturbine angeordneten Verdichtern hergestellt. Es ist nunmehr möglich, die Leistung der Gasturbogruppe und/oder der Dampfturbine zwischen den jeweiligen Generatoren und Verdichtern aufzuteilen. Es ist weiterhin möglich, die Generatoren im Leerlauf oder gar zur Unterstützung des Antriebs der Verdichter elektromotorisch zu betreiben. Zusätzlich kann auch der Generator der Luftturbine an einen Verdichter angekoppelt und elektromotorisch betrieben werden. Auf diese Weise lässt sich, insbesondere bei niedrigen Strompreisen, den Druckluftspeicher sehr schnell und gewinnbringend auffüllen.

Das ermöglicht mithin, dass diese Luft im Druckluftspeicher im Zeiten hohen Leistungsbedarfs in einem Gas/Luft-Wärmetauscher im Wärmetausch mit dem Abgas der Gasturbogruppe kalorisch aufbereitet und danach in der Luftturbine unter Leistungsabgabe entspannt werden kann.

Und falls der Gas/Luft-Wärmetauscher bei einem unmittelbaren Bedarf zu wenig Wärmespeicherung aus dem vorangehenden Betrieb aufweisen sollte, lässt sich dies leicht auffangen, indem beispielsweise ein Rohrbrenner vorgesehen wird, welcher in solchen Situationen unmittelbar eingreifen und so die nicht vorhandene Wärmekapazität kurzfristig beibringen kann.

Immerhin lässt sich feststellen, dass der Druckluftspeicher bei der rekuperativen Betriebsart ein immanentes Wärmepotential aufweist, so dass die vom Druckluftspeicher entnommene Luft, welche üblicherweise mit einem Druck von mindestens 60 bar bei einer Temperatur von ca. 30°C zur Verfügung steht, nach Durchströmung des Gas/Luft-Wärmetauschers ohne weiteres bis auf ca. 550°C aufgewärmt wird. Der Druck dieser thermisch aufbereiteten Luft bleibt indessen immer noch hoch, üblicherweise in der Größenordnung von ca. 55 bar.

Sonach steht eine hochwertige Arbeitsluft zur Verfügung, welche sich besonders gut eignet, die zur Kraftwerksanlage gehörende Luftturbine unmittelbar zu betreiben und dort über den mit der Luftturbine gekoppelten Generator Strom zu produzieren.

Vorteilhafte und zweckmässige Weiterbildungen der erfindungsgemässen Aufgabenlösung sind in den weiteren abhängigen Ansprüchen gekennzeichnet.

Im folgenden wird anhand der Zeichnung ein Ausführungsbeispiel der Erfindung näher erläutert. Alle für das unmittelbare Verständnis der Erfindung nicht erforderlichen Elemente sind fortgelassen worden. Gleiche Elemente sind in den verschiedenen Figuren, soweit solche ins Verfahren eingebracht werden, mit den gleichen Bezugszeichen versehen. Die Strömungsrichtung der Medien ist mit Pfeilen angegeben.

### Kurze Beschreibung der Zeichnung

Es zeigt:

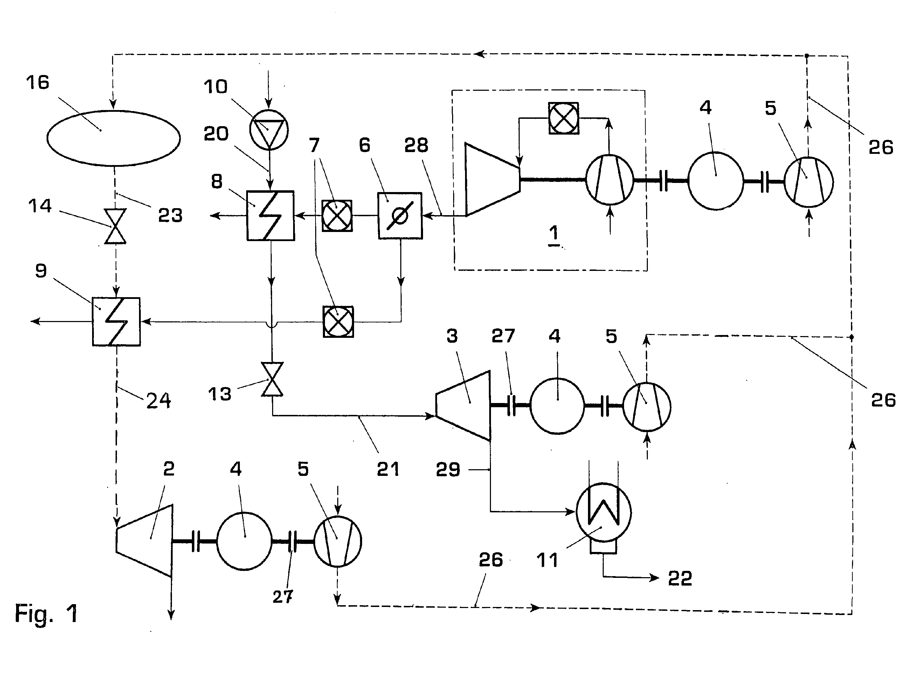

Fig. 1 eine Kraftwerksanlage, welche auf einem alternativen Betrieb aufgebaut ist.

### Wege zur Ausführung der Erfindung, gewerbliche Verwendbarkeit

Die in der Figur dargestellte Kraftwerksanlage umfasst eine Gasturbogruppe 1, eine Dampfturbine 3, sowie einen Druckluftspeicher 16 mit einer Luftturbine 2. Sowohl die Gasturbogruppe 1 als auch die Dampfturbine 3 als auch die Luftturbine 2 sind mit je einem Generator 4 und einem Verdichter 5 auf einem gemeinsamen Wellenstrang angeordnet. Dabei sind jeweils zwischen der jeweiligen Kraftmaschine und dem Generator sowie zwischen dem Verdichter und dem Generator schaltbare Kupplungen 27 vorgesehen. Vorzugsweise sind alle Generatoren 4 auch elektromotorisch betreibbar. Im Abgasströmungsweg der Gasturbogruppe 1 ist ein Strömungsverteiler 6 mit einer Klappe angeordnet, welche es ermöglicht, das Abgas 28 der Gasturbogruppe 1 wahlweise zu einem Dampferzeuger 8 für die Speisung der Dampfturbine 3 oder zu einem Gas/Luft-Wärmetauscher 9 zu leiten. Vor dem Dampferzeuger 8 und dem Gas/Luft-Wärmetauscher 9 ist jeweils noch ein optionaler Rohrbrenner 7 angeordnet, welcher es ermöglicht, die in dem jeweiligen Wärmetauscher zur Verfügung stehende thermische Leistung zu erhöhen. Die Dampfturbine 3 und der Dampferzeuger 8 sind auf an sich bekannte Weise in einem Wasser-Dampf-Kreislauf integriert. Dieser umfasst eine Speisewasserpumpe 10, welche unter Druck stehendes Speisewasser 20 zum Dampferzeuger 8 fördert. Dort im Wärmetausch mit Abgasen 28 der Gasturbogruppe 1 erzeugter Frischdampf 21 wird über ein Frischdampfventil 13 zur Dampfturbine 3 geleitet und dort unter Leistungsabgabe entspannt. Der entspannte Dampf 29 wird in einem Kondensator 11 entspannt und das Kondensat 22 wird zur Speisewasserpumpe 10 zurückgeführt. Der Druckluftspeicher 16 ist durch den Verdichter 5 mit Druckluft 26 befüllbar. In Zeiten hohen Leistungsbedarfs wird diese Luft im Gas/Luft-Wärmetauscher 9 im Wärmetausch mit dem Abgas 28 der Gasturbogruppe 1 erhitzt und in der Luftturbine 2 unter Leistungsabgabe entspannt. Optional wird auch hier stromab dieses Gas/Luft-Wärmetauschers 9 ein nicht näher gezeigter Rohrbrenner vorgesehen, der dann allenfalls zum Einsatz gelangt, wenn die Luftturbine 2 allein mit der vorhandenen Druckluft im Druckluftspeicher 16 betrieben werden soll.

Eine solche Druckluftspeicheranlage steht zur Leistungsabgabe selbstverständlich nur über begrenzte Zeiträume zur Verfügung, solange also, bis der Druck in Druckluftspeicher 16 unter einen kritischen Wert abfällt. Die hier beschriebene Kraftwerksanlage ermöglicht zum Beispiel die folgenden Betriebsarten. In einem normalen Dauerbetrieb ist ein Generator 4 an die Gasturbogruppe 1 angekoppelt. Ein zweiter Generator 4 ist an die Dampfturbine 3 angekoppelt. Die Abgasklappe im Strömungsverteiler 6 ist demnach so gestellt, dass das Abgas 28 der Gasturbogruppe 1 zum Dampferzeuger 8 geleitet wird. Die Kraftwerksanlage arbeitet dann im herkömmlichen Kombibetrieb zur dauerhaften Stromerzeugung. Bei sinkendem elektrischen Leistungsbedarf und entsprechend niedrigeren Strompreisen wird zusätzlich die Verbindung mit den auf den Wellensträngen der Gasturbogruppe 1 und der Dampfturbine 3 angeordneten Verdichtern 5 hergestellt. Es ist nunmehr möglich, die Leistung der Gasturbogruppe 1 und/oder der Dampfturbine 3 zwischen den jeweiligen Generatoren 4 und Verdichtern 5 aufzuteilen. Es ist weiterhin möglich, die Generatoren 4 im Leerlauf oder gar zur Unterstützung des Antriebs der Verdichter 5 elektromotorisch zu betreiben. Zusätzlich kann auch der Generator 4 der Luftturbine 2 an einen Verdichter 5 angekoppelt und elektromotorisch betrieben werden. Auf diese Weise kann, bei niedrigeren Strompreisen, der Druckluftspeicher 16 sehr schnell gefüllt wird, womit eine wichtige Energiereserve zur Verfügung steht. In Zeiten hohen Leistungsbedarfs und entsprechend hoher Strompreise werden die Verdichter 5 stillgesetzt. Weiterhin wird auch die Dampfturbine 3 stillgesetzt. Das heisst, alle Verdichter 5, beziehungsweise wenigstens die Verdichter, die auf den Wellensträngen der Gasturbogruppe 1 und der Luftturbine 2 angeordnet sind, sind von den Generatoren 4 getrennt. Die Luftturbine 2 und die Gasturbogruppe 1 sind mit dem jeweiligen Generator 4 verbunden. Die Abgasklappe im Strömungsverteiler 6 ist so eingestellt, dass das Abgas 28 den Gas/Luft-Wärmetauscher 9 durchströmt. Das Absperrorgan 14, welches stromab des Druckluftspeichers 16 angeordnet ist, wird geöffnet, und somit wird Druckluft aus dem Druckluftspeicher 16 in den Gas/Luft-Wärmetauscher 9 geleitet, dort erhitzt, und zur Stromerzeugung in der Luftturbine 2 entspannt. Selbstverständlich ermöglicht die dargestellte Anordnung mit ihren vielfältigen Möglichkeiten der Fluidführung und der Leistungsaufteilung eine Vielzahl möglicher um weiter Betriebsvarianten, welche der Fachmann nach Bedarf realisiert, und die in diesem Rahmen nicht abschliessend dargestellt worden sind.

Der Gas/Luft-Wärmetauscher selbst, der zum Betrieb der Kraftwerksanlage bei der rekuperativen Betriebsart über die Druckspeicheranlage gehört, weist ein immanentes Wärmepotential auf, so dass die vom Druckspeicher entnommene Druckluft 23, welche üblicherweise mit einem Druck von mindestens 60 bar bei einer Temperatur von ca. 30°C zur Verfügung steht, nach Durchströmung desselben auf ca. 550°C aufgewärmt wird. Der Druck dieser thermisch aufbereiteten Druckluft bleibt indessen immer noch hoch, üblicherweise in der Größenordnung von ca. 55 bar. Demnach steht genügendes Potential für die Aufbereitung der Arbeitsluft zur Verfügung, um sicher eine relativ grosse Stromenergie zu erzeugen.

Falls der Wärmetauscher bei einem solchen unmittelbaren Bedarf zu wenig Wärmespeicherung aus dem vorangehenden Betrieb aufweisen sollte, lässt sich dies leicht auffangen, indem beispielsweise aus einem in der Zeichnung nicht näher dargestellten Rohrbrenner zum Einsatz kommt, welcher in solchen Situationen unmittelbar eingreift und so die nicht vorhandene Wärmekapazität aus dem Gas/Luft-Wärmetauscher 9 kurzfristig einbringen kann.

### Bezugszeichenliste

- 1: Gasturbogruppe
- 2: Luftturbine
- 3: Dampfturbine
- 4: Generator(en)
- 5: Kompressor(en)
- 6: Strömungsverteiler mit Klappe, Strömungsverzweiger
- 7: Rohrbrenner
- 8: Dampferzeuger
- 9: Gas/Luft-Wärmetauscher
- 10: Speisewasserpumpe
- 11: Kondensator
- 13: Frischdampfventil
- 14: Absperrorgan
- 16: Druckluftspeicher
- 20: Speisewasser
- 21: Frischdampf
- 22: Kondensat
- 23: Druckluft
- 24: Thermisch aufbereitete Druckluft
- 26: Druckluft(leitung)
- 27: Kupplung
- 28: Abgas
- 29: Entspannter Dampf

## Patentansprüche

1. Kraftwerksanlage, mit einer Gasturbogruppe (1), einer Dampfturbine (3), einem Druckluftspeicher (16), einer Luftturbine (2), wobei stromab der Gasturbogruppe ein Strömungsverzweiger (6) mit einer verstellbaren Klappe für die Abgase (28) der Gasturbogruppe angeordnet ist, welcher Strömungsverzweiger mit mindestens zwei Fluidströmungspfaden ausgestattet ist, wobei der eine Strömungspfad mit einem Dampferzeuger (8) und stromab desselben mit der Dampfturbine in Wirkverbindung steht, wobei der andere Strömungspfad mit einem Wärmetauscher (9) in Wirkverbindung steht, wobei dieser Wärmetauscher selbst stromauf mit dem Druckluftspeicher und stromab mit der Luftturbine in Wirkverbindung steht.

2. Kraftwerksanlage nach Anspruch 1, **dadurch gekennzeichnet, dass** die Dampfturbine und/oder die Luftturbine mit mindestens einem Generator (4) ausgerüstet ist.

3. Kraftwerksanlage nach Anspruch 1, **dadurch gekennzeichnet, dass** die Dampfturbine und/oder die Luftturbine mit mindestens einem Verdichter (5) ausgerüstet ist.

4. Kraftwerksanlage nach Anspruch 3, **dadurch gekennzeichnet, dass** Verdichter über eine Kupplung (27) zuschaltbar ist.

5. Kraftwerksanlage nach Anspruch 1, **dadurch gekennzeichnet, dass** stromab des Strömungsverzweigers mindestens in einem Strömungspfad mindestens ein Rohrbrenner angeordnet ist.

6. Verfahren zum Betrieb einer Kraftwerksanlage, welche im wesentlichen aus einer Gasturbogruppe (1), einem Druckluftspeicher (16), einer mit mindestens einem Generator ausgestattete Luftturbine (2) besteht, wobei die aus dem Druckluftspeicher entnommene Druckluft (23) durch einen abströmungsseitig der Gasturbogruppe wirkenden Wärmetauscher (9) geleitet und dort thermisch aufbereitet wird, dass die Druckluft anschliessend zur Erzielung einer Strommenge die Luftturbine beaufschlagt.

7. Verfahren nach Anspruch 6, **dadurch gekennzeichnet, dass** die Druckluft (23) aus dem Druckluftspeicher (16) nach Durchströmung des stromab wirkenden Wärmetauschers (9) durch einen Rohrbrenner einer thermischen Aufbereitung vor Beaufschlagung der Luftturbine (2) unterzogen wird.

8. Verfahren nach den Ansprüchen 6 und 7, **dadurch gekennzeichnet, dass** die Druckluft (23) aus dem Druckluftspeicher (16) entweder im Wärmetauscher (9) oder durch den Rohrbrenner oder sowohl als auch thermisch aufbereitet wird.

9. Verfahren nach Anspruch 6, **dadurch gekennzeichnet, dass** die Kraftwerksanlage mit einer Dampfturbine (3) erweitert ist, welche im Kombibetrieb mit aus den Abgasen (28) der Gasturbogruppe (1) erzeugtem Dampf (21) betrieben wird.

10. Verfahren nach den Ansprüchen 6 und 9, **dadurch gekennzeichnet, dass** Gasturbogruppe (1), Luftturbine (2) und Dampfturbine (3) mit je einem Generator (4) und einem Kompressor (5) betrieben werden, und dass die jeweiligen Kompressoren einzeln oder im Verbund bei Bedarf oder bei bestimmten Betriebszuständen der Kraftwerksanlage zur Aufladung des Druckluftspeichers (16) mit Druckluft (26) herangezogen werden.

11. Verfahren nach den Ansprüchen 6 und 9, **dadurch gekennzeichnet, dass** die Abgase (28) je nach Betriebsart entweder zur Aufbereitung einer Dampfmenge in einem Dampferzeuger (8) oder zur thermischen Aufbereitung der Druckluft (23) in einem weiteren Wärmetauscher (9) oder sowohl als auch eingesetzt werden.

12. Verfahren nach Anspruch 11, **dadurch gekennzeichnet, dass** die Abgase (28) nach Bedarf über zusätzliche Rohrbrenner (7) thermisch aufbereitet werden.

## Claims

1. Power plant, with a gas turbogroup (1), a steam turbine (3), a compressed air accumulator (16), an air turbine (2), wherein a flow divider (6), with an adjustable damper for the exhaust gases (28) of the gas turbogroup, is arranged downstream of the gas turbogroup, which flow divider is equipped with at least two fluid flow paths, wherein the one flow path is in communication with a steam generator (8) and downstream of the steam generator is in communication with the steam turbine, wherein the other flow path is in communication with a heat exchanger (9), wherein this heat exchanger itself is in communication upstream with the compressed air accumulator and is in communication downstream with the air turbine.

2. Power plant according to Claim 1, **characterized in that** the steam turbine and/or the air turbine is equipped with at least one generator (4).

3. Power plant according to Claim 1, **characterized in that** the steam turbine and/or the air turbine is equipped with at least one compressor (5).

4. Power plant according to Claim 3, **characterized in that** the compressor is connectable by means of a clutch (27).

5. Power plant according to Claim 1, **characterized in that** at least one tubular burner is arranged downstream of the flow divider in at least one flow path.

6. Method for operating a power plant, which basically comprises a gas turbogroup (1), a compressed air accumulator (16), an air turbine (2) which is equipped with at least one generator, the compressed air (23) which is extracted from the compressed air accumulator being directed through a heat exchanger (9) which operates on the downstream side of the gas turbogroup, and is thermally conditioned there, in that the compressed air then charges the air turbine for producing a quantity of electricity.

7. Method according to Claim 6, **characterized in that** the compressed air (23) from the compressed air accumulator (16), after flowing through the heat exchanger (9) which operates downstream, is subjected to thermal conditioning by means of a tubular burner, before charging the air turbine (2).

8. Method according to Claims 6 and 7, **characterized in that** the compressed air (23) from the compressed air accumulator (16) is thermally conditioned either in the heat exchanger (9) or by means of the tubular burner or both.

9. Method according to Claim 6, **characterized in that** the power plant is extended by a steam turbine (3), which in combined operation is operated with steam (21) which is produced from the exhaust gases (28) of the gas turbogroup (1).

10. Method according to Claims 6 and 9, **characterized in that** gas turbogroup (1), air turbine (2) and steam turbine (3) are operated each with a generator (4) and a compressor (5), and **in that** the respective compressors, individually or in combination if required or in the case of defined operating states of the power plant, are called upon for charging the compressed air accumulator (16) with compressed air (26).

11. Method according to Claims 6 and 9, **characterized in that** the exhaust gases (28), depending upon operating mode, are used either for conditioning of a steam volume in a steam generator (8), or for thermal conditioning of the compressed air (23) in an additional heat exchanger (9) or both.

12. Method according to Claim 11, **characterized in that** the exhaust gases (28), according to requirement, are thermally conditioned by means of additional tubular burners (7).

## Revendications

1. Centrale électrique, comprenant un ensemble turbine à gaz (1), une turbine à vapeur (3), un accumulateur d'air comprimé (16) et une turbine à air (2), un diviseur d'écoulement (6) doté d'un volet réglable pour les gaz d'échappement (28) de l'ensemble turbine à gaz étant disposé en amont de l'ensemble turbine à gaz, lequel diviseur d'écoulement est équipé d'au moins deux chemins d'écoulement de fluide, l'un des chemins d'écoulement de fluide étant en liaison fonctionnelle avec un générateur de vapeur (8) et avec la turbine à vapeur en aval de ce dernier, l'autre chemin d'écoulement de fluide étant en liaison fonctionnelle avec un échangeur de chaleur (9), cet échangeur de chaleur étant lui-même en liaison fonctionnelle, en amont, avec l'accumulateur d'air comprimé et, en aval, avec la turbine à air.

2. Centrale électrique selon la revendication 1, **caractérisée en ce que** la turbine à vapeur et/ou la turbine à air sont équipées d'au moins un générateur (4).

3. Centrale électrique selon la revendication 1, **caractérisée en ce que** la turbine à vapeur et/ou la turbine à air sont équipées d'au moins un compresseur (5).

4. Centrale électrique selon la revendication 3, **caractérisée en ce que** le compresseur peut être connecté par le biais d'un accouplement (27).

5. Centrale électrique selon la revendication 1, **caractérisée en ce qu'**au moins un brûleur tubulaire est disposé en aval du diviseur d'écoulement au moins dans un chemin d'écoulement.

6. Procédé de fonctionnement d'une centrale électrique, laquelle est constituée essentiellement d'un ensemble turbine à gaz (1), d'un accumulateur d'air comprimé (16) et d'une turbine à air (2) équipée d'au moins un générateur, dans lequel l'air comprimé (23) prélevé sur l'accumulateur d'air comprimé est guidé à travers un échangeur de chaleur (9) agissant du côté aval de l'ensemble turbine à gaz et est traité thermiquement dans cet échangeur de chaleur, et dans lequel l'air comprimé sollicite ensuite la turbine à air pour obtenir une quantité de courant.

7. Procédé selon la revendication 6, **caractérisé en ce que** l'air comprimé (23) provenant de l'accumulateur d'air comprimé (16), après avoir traversé l'échangeur de chaleur (9) agissant en aval, est soumis à un traitement thermique au moyen d'un brûleur tubulaire avant de solliciter la turbine à air (2).

8. Procédé selon les revendications 6 et 7, **caractérisé en ce que** l'air comprimé (23) provenant de l'accumulateur d'air comprimé (16) est traité thermiquement dans l'échangeur de chaleur (9) et/ou au moyen du brûleur tubulaire.

9. Procédé selon la revendication 6, **caractérisé en ce que** la centrale électrique est prolongée par une turbine à vapeur (3) qui, en fonctionnement combiné, fonctionne avec la vapeur (21) produite à partir des gaz d'échappement (28) de l'ensemble turbine à gaz (1).

10. Procédé selon les revendications 6 et 9, **caractérisé en ce que** l'ensemble turbine à gaz (1), la turbine à air (2) et la turbine à vapeur (3) fonctionnent respectivement avec un générateur (4) et un compresseur (5), et **en ce que** les compresseurs respectifs sont utilisés, isolément ou conjointement au besoin ou en cas d'états de fonctionnement déterminés de la centrale électrique, pour charger l'accumulateur d'air comprimé (16) avec de l'air comprimé (26).

11. Procédé selon les revendications 6 et 9, **caractérisé en ce que** les gaz d'échappement (28), en fonction du type de fonctionnement, sont utilisés pour le traitement d'une quantité de vapeur dans un générateur de vapeur (8) et/ou pour le traitement thermique de l'air comprimé (23) dans un échangeur de chaleur supplémentaire (9).

12. Procédé selon la revendication 11, **caractérisé en ce que** les gaz d'échappement (28) sont au besoin traités thermiquement au moyen de brûleurs tubulaires supplémentaires (7).
